# EUROPEAN PATENT APPLICATION

(11) **EP 3 547 523 A1**
(43) Date of publication of application: **02.10.2019**
(21) Application number: 17874910.7
(22) Date of filing: 28.02.2017
(51) Int. Cl.: H02M 5/458

(54) **SMART SINE-WAVE BOOST CONVERSION DEVICE**

(30) Priority: 25.11.2016 CN 201611064016
(71) Applicant: Guangdong BESTEK E-commerce Co., Ltd, Shenzhen, Guangdong 518102 (CN)
(72) Inventor: LIAO, Zhigang, Shenzhen, Guangdong 518102 (CN); HOU, Tao, Shenzhen, Guangdong 518102 (CN)
(74) Representative: LLR
(86) International application number: PCT/CN2017/075077
(87) International publication number: WO 2018/094896

(57) **Abstract**

The present application discloses a smart sine wave step-down converter, which comprises: a high-frequency modulation unit including a storage inductor and a first switching tube, wherein the storage inductor has a front end connected to an output terminal of the input and rectifying unit, and a back end connected to the drain of the first switching tube, the source of the first switching tube is earthed, and the grid of the first switching tubes is connected with PWM pulse signals; an inductance filtering unit including a filtering inductor that has a front end connected to the cathode of the freewheel diode and a back end connected to a inverting paraphase unit; a filter controlling unit including an electrolytic capacitor and a second switching tube, wherein the electrolytic capacitor has an anode connected to the output terminal of the input and rectifying unit and a cathode connected to the drain of the second switching tube, and the source of the second switching tube is earthed. The smart sine wave step-up converter has a good performance for step-up conversion, avoids damage to a load and interference to the power grid, and is easy to carry.

## Description

### TECHNICAL FIELD

The present application relates to a voltage converter, in particular to a smart sine wave step-up converter.

### BACKGROUND

The sine wave step-up converter, also known as a step-up travel platooninsert, is a sine wave AC/AC converter, where the function of step-up and stable voltage and frequency can be realized in the AC/AC transformation process. At present, most AC/AC portable devices in the market output modified waves, where the voltage is firstly rectified to a DC voltage by a step-up circuit, secondly stepped up by the BOOST and finally inverted. However, such step-up converter mostly output a voltage presented as a modified wave, which is quite harmful to electrical devices, and meanwhile has a large volume that is inconvenient for carrying. Moreover, this kind of step-up converter has a low PF value, which is easy to interfere with the power grid.

### SUMMARY

The technical problem to be solved by the present application is to provide a smart sine wave step-up converter having a good performance for step-up conversion, avoiding damage to a load and interference to the power grid, and being easy to carry.

The following technical scheme is used for solving the above-mentioned problem.

A smart sine wave step-up converter is provided, comprising: an input and rectifying unit connected to a mains voltage and rectifies the mains voltage; a high-frequency modulation unit including a storage inductor, a first switching tube and a freewheel diode, wherein the storage inductor comprises a front end connected to an output terminal of the input and rectifying unit, and a back end connected to the drain of the first switching tube, the drain of the first switching tube is further connected to the anode of the freewheel diode, the source of the first switching tube is earthed, and the grid of the first switching tubes is connected with PWM pulse signals; an inductance filtering unit including a filtering inductor that has a front end connected to the cathode of the freewheel diode and a back end connected to a inverting paraphase unit, wherein when the first switching tube is on-switched, the back end of the storage inductor is earthed by the first switching tube and starts to store energy, and when the first switching tube is off-switched, a voltage is produced at the back end of the storage inductor which is higher than that at the front end thereof due to the self-inductance effect of the storage inductor, the voltage at the back end of the storage inductor is rectified via the freewheel diode, filtered via the filtering inductor to filter out the high-frequency wave, and then transmitted to the inverting paraphase unit that invertedly converts the voltage output from the back end of the filtering inductor to a sine AC voltage; a filter controlling unit including an electrolytic capacitor and a second switching tube, wherein the electrolytic capacitor has an anode connected to the output terminal of the input and rectifying unit and a cathode connected to the drain of the second switching tube, and the source of the second switching tube is earthed, wherein when the mains voltage connected to the input and rectifying unit is higher than or equal to a preset value, the voltage of the grid of the second switching tube is lowered to off-switch the second switching tube; and wherein when the mains voltage connected to the input and rectifying unit lower than the preset value, a driving voltage is loaded on the grid of the second switching tube to on-switch the second switching tube, and the voltage output from the input and rectifying unit is filtered by the electrolytic capacitor.

Preferably, wherein the first switching tube, and the second switching tube are N-channel MOS tubes.

Preferably, the smart sine wave step-up converter further comprises an MCU controlling unit, wherein the grid of the first switching tube, the grid of the second switching tube and the control terminal of the inverting paraphase unit are connected to the MCU controlling unit respectively, and the MCU controlling unit outputs the PWM pulse signals to the first switching tube, controls the on/off state of the second switching tube and controls the inverting paraphase unit to execute conversion.

Preferably, the smart sine wave step-up converter further comprises an AC sampling unit that comprises an input terminal of the AC sampling unit connected to the input and rectifying unit and an output terminal is connected to the MCU controlling unit, wherein the AC sampling unit is configured to collect a voltage value and a phase of the mains voltage and then transmit them to the MCU controlling unit, the MCU controlling unit is configured to control the inverting paraphase unit to execute inversion according to the phase of the mains voltage collected by the AC sampling unit so that the inverting paraphrase unit outputs the sine AC voltage having the same phase as the mains voltage, and is configured to determine whether the mains voltage is lower than the preset value according to the voltage value collected by the AC sampling unit: if it is lower than the preset value, the MCU controlling unit transmits the PWM pulse signals to the grid of the first switching tube, and loads the driving voltage to the grid of the second switching tube; if it is higher than or equal to the preset value, the MCU controlling unit controls the first switching tube to maintain off-switched, and lowers the voltage of the grid of the second switching tube.

Preferably, when determining that the mains voltage is lower than the present value, the MCU controlling unit controls the second switching tube to be on-switched at the zero-crossing point of the mains voltage according to the phase of the mains voltage collected by the AC sampling unit.

Preferably, the AC sampling unit comprises an operational amplifier and a comparator, two input terminals of the operational amplifier are respectively connected to the live and zero lines of the input and rectifying unit via their corresponding current-limiting sampling resistors, and the output terminal of the operational amplifier is connected to the MCU controlling unit so that the voltage value of the mains voltage is obtained after the MCU controlling unit calculating the voltage signal output from the operational amplifier.

Preferably, the output terminal of the operational amplifier is further connected to the anti-phased terminal of the comparator, the in-phased terminal of the comparator is connected to a reference voltage, and the output terminal of the comparator is connected to the MCU controlling unit, and the MCU controlling unit is configured to obtain the phase of the mains voltage according to the voltage signal output from the comparator.

Preferably, the smart sine wave step-up converter further comprises a current sampling unit that comprises a sampling resistor, wherein the sampling resistor is connected between the source of the first switching tube and the earth in series, and the current flows from the source of the first switching tube to the MCU controlling unit.

Preferably, the inverting paraphase unit includes an inverter bridge comprising a third switching tube, a fourth switching tube, a fifth switching tube and a sixth switching tube, and wherein the grid of the third switching tube, the grid of the fourth switching tube, the grid of the fifth switching tube, and the grid of the sixth switching tube are respectively connected to the MCU controlling unit that is configured to control the third switching tube, the fourth switching tube, the fifth switching tube and the sixth switching tube to be on-switched or off-switched in order to the inverting paraphrase unit output the sine AC voltage.

In the smart sine wave step-up converter according to the present application, the input and rectifying unit rectifies the mains voltage and outputs the DC voltage to be loaded on the front end of the storage inductor. During on work, the first switching tube remains on-switched or off-switched by the grid of the first switching tube connected to the PWM pulse signals. When the first switching tube is on-switched, the DC voltage is transmitted through the storage inductor and the first switching tube in turn to the earth, and meanwhile the storage inductor starts to store energy. When the first switching tube is off-switched, the storage inductor generates the self-inductance by the voltage mutation, such that the voltage is produced at the back end of the storage inductor which is higher than that at the front end thereof due to the self-inductance effect of the storage inductor. The voltage at the back end of the storage inductor is filtered via the filtering inductor to filter out the high-frequency wave, and then transmitted to the inverting paraphase unit. Under the control of the PWM pulse signals, the first switching tube is on-switched or off-switched repeatedly, such that the high DC voltage each time output from the storage inductor is transmitted to the inverting paraphase unit. In the process mentioned above, the on-switched time of the first switching tube can be adjusted by adjusting the duty ratio of the PWM pulse signals, such that the energy stored in the storage inductor is controlled. The more the energy stored in the storage inductor is, the higher the voltage output from the storage inductor is, so that the smart step-up conversion of the sine wave is realized. On this basis, the connecting state of the electrolytic capacitor can be controlled by on-switching or off-switching the second switching tube. In the case that the mains voltage is lower than the preset value, the electrolytic capacitor is on-switched, and the half-wave DC voltage output from the input and rectifying unit is filtered by the electrolytic capacitor so that the back end of the inductor outputs a smoother and stable pulsating DC voltage to be loaded on the high-frequency modulation unit which outputs a stable and reliable half-wave DC voltage to be inverted to the sine AC voltage for power supply by means of the inverting paraphase unit. Based on the above mentioned principles, the smart sine wave step-up converter according to the present application has a good performance for step-up conversion, outputs a stable and reliable voltage, avoids damage to a load and interference to the power grid, and is easy to carry.

### BRIEF DESCRIPTION OF THE DRAWINGS

FIG. 1 is a schematic circuit diagram of a smart sine wave step-up converter in accordance with an exemplary embodiment.
FIG. 2 is a schematic circuit diagram of an AC sampling unit of the smart sine wave step-up converter of FIG. 1.
FIG. 3 is a schematic circuit diagram of an MCU controlling unit of the smart sine wave step-up convertere of FIG. 1.

### DETAILED DESCRIPTION

The present application would be described in greater detail with reference to the drawings and embodiments.

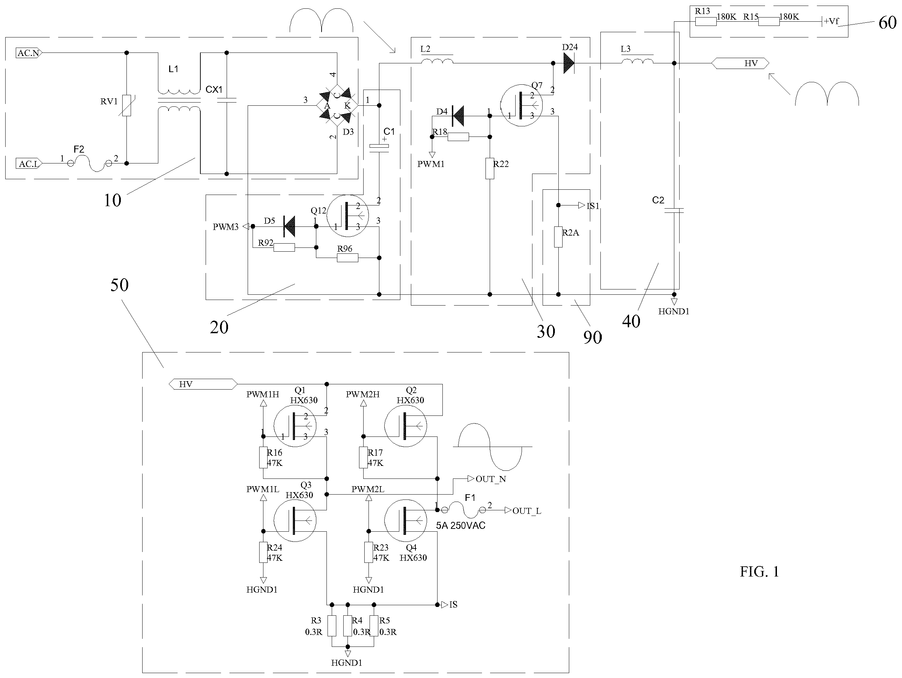

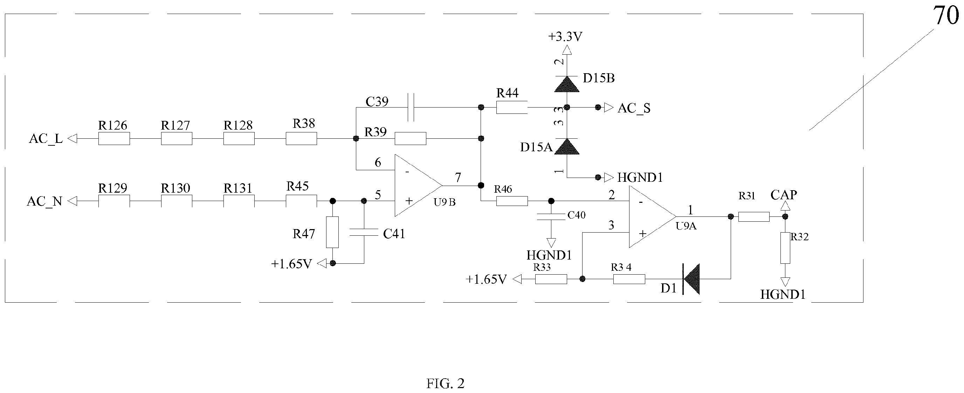

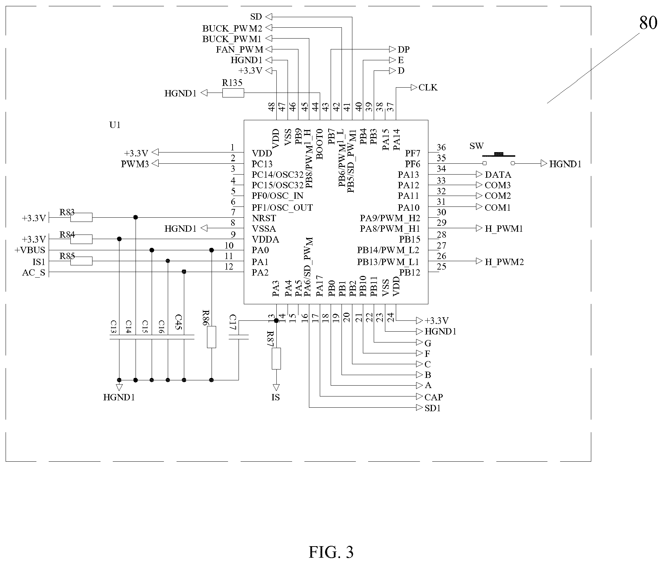

A smart sine wave step-up converter is disclosed in accordance with the present application, as is shown in Figs 1-3, including:
an input and rectifying unit 10 connected to a mains voltage and rectifies the mains voltage.
a high-frequency modulation unit 30 including a storage inductor L2, a first switching tube Q7 and a freewheel diode D24, wherein the storage inductor L2 has a front end connected to an output terminal of the input and rectifying unit 10 and a back end connected to the drain of the first switching tube Q7, the drain of the first switching tube Q7 is further connected to the anode of the freewheel diode D24, the source of the first switching tube Q7 is earthed, and the grid of the first switching tubes Q7 is connected with PWM pulse signals.
an inductance filtering unit 40 including a filtering inductor L3 that has a front end connected to the cathode of the freewheel diode D24 and a back end connected to a inverting paraphase unit 50, wherein when the first switching tube Q7 is on-switched, the back end of the storage inductor L2 is earthed by the first switching tube Q7 and starts to store energy, and when the first switching tube Q7 is off-switched, a voltage is produced at the back end of the storage inductor L2 which is higher than that at the front end thereof due to the self-inductance effect of the storage inductor L2, the voltage at the back end of the storage inductor L2 is rectified via the freewheel diode D24, filtered via the filtering inductor L3 to filter out the high-frequency wave, and then transmitted to the inverting paraphase unit 50 that invertedly converts the voltage output from the back end of the filtering inductor L3 to a sine AC voltage.
a filter controlling unit 20 including an electrolytic capacitor C1 and a second switching tube Q12, wherein the electrolytic capacitor C1 has an anode connected to the output terminal of the input and rectifying unit 10 and a cathode connected to the drain of the second switching tube Q12, and the source of the third switching tube Q12 is earthed.
when the mains voltage connected to the input and rectifying unit 10 is higher than or equal to a preset value, the voltage of the grid of the second switching tube Q12 is lowered to off-switch the second switching tube Q12.
when the mains voltage connected to the input and rectifying unit 10 lower than the preset value, a driving voltage is loaded on the grid of the second switching tube Q12 to on-switch the second switching tube Q12, and the voltage output from the input and rectifying unit 10 is filtered by the electrolytic capacitor C1.

The working principle of the smart sine wave step-up converter above mentioned is: the input and rectifying unit 10 rectifies the mains voltage and outputs the DC voltage to be loaded on the front end of the storage inductor L2. During on work, the first switching tube Q7 remains on-switched or off-switched by the grid of the first switching tube Q7 connected to the PWM pulse signals. When the first switching tube Q7 is on-switched, the DC voltage is transmitted through the storage inductor L2 and the first switching tube Q7 in turn to the earth, and meanwhile the storage inductor L2 starts to store energy. When the first switching tube Q7 is off-switched, the storage inductor L2 generates the self-inductance by the voltage mutation, such that the voltage is produced at the back end of the storage inductor L2 which is higher than that at the front end thereof due to the self-inductance effect of the storage inductor L2. The voltage at the back end of the storage inductor L2 is rectified via the freewheel diode D24, filtered via the filtering inductor L3 to filter out the high-frequency wave, and then transmitted to the inverting paraphase unit 50. Under the control of the PWM pulse signals, the first switching tube Q7 is on-switched or off-switched repeatedly, such that the high DC voltage each time output from the storage inductor L2 is transmitted to the inverting paraphase unit 50. In the process mentioned above, the on-switched time of the first switching tube Q7 can be adjusted by adjusting the duty ratio of the PWM pulse signals, such that the energy stored in the storage inductor L2 is controlled. The more the energy stored in the storage inductor L2 is, the higher the voltage output from the storage inductor L2 is, so that the smart step-up conversion of the sine wave is realized. On this basis, the connecting state of the electrolytic capacitor C1 can be controlled by on-switching or off-switching the second switching tube Q12. In the case that the mains voltage is higher than or equal to the preset value and thus meets the loading requirement, the step-up conversion is not required and the electrolytic capacitor C1 is off-switched. In the case that the mains voltage is lower than the preset value, the electrolytic capacitor C1 is on-switched, and the half-wave DC voltage output from the input and rectifying unit 10 is filtered by the electrolytic capacitor C1 so that the back end of the inductor L3 outputs a smoother and stable pulsating DC voltage to be loaded on the high-frequency modulation unit 30 which outputs a stable and reliable half-wave DC voltage to be inverted to the sine AC voltage for power supply by means of the inverting paraphase unit 50. Based on the above mentioned principles, the smart sine wave step-up converter according to the present application has a good performance for step-up conversion, outputs a stable and reliable voltage, avoids damage to a load and interference to the power grid, and is easy to carry.

In the present embodiment, the first switching tube Q7 and the second switching tube Q12 are N-channel MOS tubes.

Referring to FIGS. 1-3, in order to better realize smart control, the smart sine wave step-up converter according to the present embodiment further includes an MCU controlling unit 80. The grid of the first switching tube Q7, the grid of the second switching tube Q12 and the control terminal of the inverting paraphase unit 50 are connected to the MCU controlling unit 80 respectively. The MCU controlling unit 80 outputs the PWM pulse signals to the first switching tube Q7, controls the on/off state of the second switching tube Q12 and controls the inverting paraphase unit 50 to execute conversion. Furthermore, the MCU controlling unit 80 includes a single-chip microcomputer U1 and its peripheral circuit.

In practical use, in terms of the travel platooninserts, the step-up conversion is required only when the travel platooninserts are applied to the environment of lower mains voltage. Therefore, it is necessary to sample and determine the AC voltage. In order to conveniently sample the mains voltage, the smart sine wave step-up converter according to the present embodiment further includes an AC sampling unit 70 having an input terminal connected to the input and rectifying unit 10 and an output terminal connected to the MCU controlling unit 80. The AC sampling unit 70 is configured to collect a voltage value and a phase of the mains voltage and then transmit them to the MCU controlling unit 80. The MCU controlling unit 80 is configured to control the inverting paraphase unit 50 to execute inversion according to the phase of the mains voltage collected by the AC sampling unit 70 so that the inverting paraphrase unit 50 outputs the sine AC voltage having the same phase as the mains voltage, and is configured to determine whether the mains voltage is lower than the preset value according to the voltage value collected by the AC sampling unit 70:
if it is lower than the preset value, the MCU controlling unit 80 transmits the PWM pulse signals to the grid of the first switching tube Q7, and loads the driving voltage to the grid of the second switching tube Q12.
if it is higher than or equal to the preset value, the MCU controlling unit controls the first switching tube Q7 to maintain off-switched, and lowers the voltage of the grid of the second switching tube Q12.

Further, when determining that the mains voltage is lower than the present value, the MCU controlling unit 80 controls the second switching tube Q12 to be on-switched at the zero-crossing point of the mains voltage according to the phase of the mains voltage collected by the AC sampling unit 70.

On the basis of the above property, the electrolytic capacitor C1 can be on-switched in time, and the filtered voltage is smoother and more stable. When the MCU control unit 80 controls the inverting paraphase unit 50, the sine table can be directly called for inversion control as the DC power is stable. At this time, the inverting paraphase unit 50 outputs a more standard sine AC voltage, thereby improving the voltage conversion performance of the smart sine wave step-down converter according to the present application.

With respect to the specific composition of the AC sampling unit 70, the AC sampling unit 70 includes an operational amplifier U9B and a comparator U9A, two input terminals of the operational amplifier U9B are respectively connected to the live and zero lines of the input and rectifying unit 10 via their corresponding current-limiting sampling resistors, and the output terminal of the operational amplifier U9B is connected to the MCU controlling unit 80 so that the voltage value of the mains voltage is obtained after the MCU controlling unit 80 calculating the voltage signal output from the operational amplifier U9B. The output terminal of the operational amplifier U9B is further connected to the anti-phased terminal of the comparator U9A, the in-phased terminal of the comparator U9A is connected to a reference voltage, and the output terminal of the comparator U9A is connected to the MCU controlling unit 80. The MCU controlling unit 80 is configured to obtain the phase of the mains voltage according to the voltage signal output from the comparator U9A.

In the case that step-up is not required, the first switching tube Q7 and the second switching tube Q12 are off-switched. The AC sampling unit 70 performs the phase sample while the mains AC voltage is subjected to voltage sampling. Based on the change of the phase, the MCU controlling unit 80 can correspondingly control the conversion frequency of the inverting paraphase unit 50 so that the inverse voltage output from the inverting paraphase unit 50 is the same as that of the mains AC voltage, thereby achieving a higher PF value and reducing interference to the power grid.

In order to achieve an output sample, a current sampling unit 90 is provided according to the embodiment, comprising a sampling resistor R2A that is connected between the source of the first switching tube Q7 and the earth in series. The current flows from the source of the first switching tube Q7 to the MCU controlling unit 80. Further, a voltage sampling unit 60 is provided according to the embodiment, which is configured to collect the voltage from the back end of the filtering inductor L3 and transmit it to the MCU controlling unit 80.

Preferably, a freewheel diode D24 is connected between the drain of the first switching tube Q7 and the front end of the filtering inductor L3. The freewheel diode D24 is used to provide power to the filtering inductor L3 and an inverter bridge when the first switching tube Q7 is off-switched, and to block a reverse current as soon as the first switching tube Q7 is on-switched such that the reverse current is prevented from being generated by the filter inductor L3, thereby achieving the rectification performance.

With respect to the composition of the inverting paraphase unit 50, the inverting paraphase unit 50 includes an inverter bridge comprising a third switching tube Q1, a fourth switching tube Q2, a fifth switching tube Q3 and a sixth switching tube Q4. The grid of the third switching tube Q1, the grid of the fourth switching tube Q2, the grid of the fifth switching tube Q3, and the grid of the sixth switching tube Q4 are respectively connected to the MCU controlling unit 80. The MCU controlling unit 80 is configured to control the third switching tube Q1, the fourth switching tube Q2, the fifth switching tube Q3 and the sixth switching tube Q4 to be on-switched or off-switched in order to the inverting paraphrase unit 50 output the sine AC voltage.

The above-described units are integrated to form a preferred embodiment of the present application. The overall operation of the preferred embodiment is shown in FIGS. 1-3.

The grid voltage is input through an AC socket, an insurance F2, a lightning protection resistor RV1, a common mode suppression inductor L1 and a group filtering circuits CX1 into an filtering circuit, and the full-wave AC voltage is rectified to be a two-half-waves sine AC voltage. The smart filtering circuit includes Q12 and C1. When the input voltage is lower than the grid voltage of 230V, the control signals PWM3 remain high by the single-chip microcomputer U1, Q12 is on-switched, the cathode of the aluminum electrolytic capacitor C1 is connected to the GND of the circuit via Q12 to perform filtering, and the anode of C1 outputs a relatively stable DC voltage. When the input voltage is higher than or equal to the grid voltage of 230V, the control signals PWM3 remain low by the single-chip microcomputer U1, Q12 is off-switched, the loop from the cathode of the aluminum electrolytic capacitor C1 to the GND of the circuit via Q12 is cut off to not perform filtering, and the anode of C1 outputs a rectified half-wave AC voltage.

In the MCU controlling unit, the single-chip microcomputer U1 determines whether to activate the smart filtering circuit by an AC input voltage sampling circuit including R126, R127, R128, R38, R129, R130, R131, R45, C39, R39, R47, C41, U9, R44 and D15, and an AC input phase sampling circuit including R46, C40, R33, R34, D1, R31, R32. If the input voltage is lower than the grid voltage of 230V, the control signals PWM3 were stepped high at the zero-crossing point of the grid voltage to active the smart filtering circuit. At the same time, the high-frequency pulse signal PWM1 is transmitted to Q7 with a 50Hz sinusoidal modulation fundamental signal, such that Q7 works in a on/off state with a frequency of 60K-100K and the duty ratio varies according to the sinusoidal change. If the input voltage is higher than or equal to the grid voltage of 230V, PWM3 remain low to not active the smart filtering circuit, and meanwhile PWM3 remain low such that Q7 does not work.

As the step-up key part, the high-frequency modulation circuit includes the storage inductor L2 (for step-up conversion), the first switching tube Q7 (e.g. switching MOS tube) and the freewheel diode D24. When determining that the input voltage is lower than the grid voltage of 230V, the single-chip microcomputer U1 outputs high-frequency control signals PWM1 (with a frequency of 60KHz-100KHz) to the gate of Q7 via D4, R8 and R22 of the driving circuit, and Q7 enters into a step-up state. Specifically, the principle of step-up is: when Q7 is on-switched, the current flows from C1 via the storage inductor L2 and the first switching tube Q7 to GND to form a loop, such that the storage inductor L2 stores energy; when Q7 is off-switched, an inductive electromotive force higher than the input voltage is generated from the storage inductor, and the inductive electromotive force is rectified to a unidirectional voltage by the freewheel diode D24 and then transmitted to the high-frequency filtering circuit to be filtered. The on-switched time of Q7 is increased or reduced by Q7 according to the changes of the sine wave of 50Hz set in the single-chip microcomputer. When determining that the input voltage is higher than or equal to the grid voltage of 230V, the single-chip microcomputer U1 off-switches the first switching tube Q7, and the rectified and filtered voltage is output via L2 and D24.

In the exemplary embodiment of the present application, the high-frequency filter circuit includes L3 and C2. The high-frequency voltage and current rectified by Q7 are filtered by L3 and C2 to a half-wave pulsating DC voltage. If Q7 is not on work, the filtering circuit does not work, which is equivalent to direct connection. The half-wave pulsating DC voltage is transmitted to the inverter bridge to be inverted. The voltage filtered by L3 passes through the voltage sampling circuit including R13, R15 and then is transmitted to the single-chip microcomputer U1 so that the duty ratio of the PWM signals of Q7 is determined by the single-chip microcomputer U1. That is to say, the high-frequency modulation circuit, the current sampling circuit, the filtering circuit and the voltage sampling circuit cooperatively form a closed loop to adjust the duty ratio of Q7 to achieve a stable filtering output voltage.

As some extension functions, in the over-current protection circuit, a current detecting circuit includes R2A and the single-chip microcomputer U1, the overcurrent protection action inside U1 would be activated when overcurrent occurs in Q7.

The inverting paraphase circuit includes Q1, Q2, Q3 and Q4. A first output half-wave AC voltage through the filtering inductor L3 passes through Q1 and Q4 and is given to the load. A second output half-wave AC voltage through the filtering inductor L3 passes through Q2 and Q3 and is given to the load. In this way, a complete frequency AC voltage is formed on the load. The PWM signals output from the single-chip microcomputer U1 are transmitted via the driving circuit, and then the PWM1H, PWM2H, PWM1L, PWM2L signals are respectively sent to their corresponding gate of Q1, Q2, Q3, Q4. The phase of the inverting paraphase circuit has the following two situations. When the input voltage is lower than the grid voltage of 230V, the inverting paraphase circuit works according to the frequency set in the single-chip microcomputer. When the input voltage is higher than or equal to the grid voltage of 230V, the phase of the inverting paraphase circuit is locked according to the phase taken by the input sampling circuit, that is to say, the frequency and the phase of the inverting paraphase circuit are consistent with the frequency and the phase of the input voltage.

The smart sine wave step-up converter is disclosed with small volume, light weight and easy to carry, can automatically adjust its output voltage within the input full voltage range, and output the output voltage in a pure sinusoidal mode, which automatically srectifies the AC voltage. At the same time, the smart sine wave step-up converter includes the voltage sampling circuit and the current sampling circuit, which are capable of preventing from surge voltage and current. Since the output voltage in a pure sinusoidal mode is suitable for various loads, the load is of strong compatibility.

Although the features and elements of the present application are described as embodiments in particular combinations, each feature or element can be used alone or in other various combinations within the principles of the present application to the full extent indicated by the broad general meaning of the terms in which the appended claims are expressed.

## Claims

1. A smart sine wave step-up converter, comprising:
an input and rectifying unit connected to a mains voltage and rectifies the mains voltage;
a high-frequency modulation unit including a storage inductor, a first switching tube and a freewheel diode, wherein the storage inductor comprises a front end connected to an output terminal of the input and rectifying unit, and a back end connected to the drain of the first switching tube, the drain of the first switching tube is further connected to the anode of the freewheel diode, the source of the first switching tube is earthed, and the grid of the first switching tubes is connected with PWM pulse signals;
an inductance filtering unit including a filtering inductor that has a front end connected to the cathode of the freewheel diode and a back end connected to a inverting paraphase unit, wherein when the first switching tube is on-switched, the back end of the storage inductor is earthed by the first switching tube and starts to store energy, and when the first switching tube is off-switched, a voltage is produced at the back end of the storage inductor which is higher than that at the front end thereof due to the self-inductance effect of the storage inductor, the voltage at the back end of the storage inductor is rectified via the freewheel diode, filtered via the filtering inductor to filter out the high-frequency wave, and then transmitted to the inverting paraphase unit that invertedly converts the voltage output from the back end of the filtering inductor to a sine AC voltage;
a filter controlling unit including an electrolytic capacitor and a second switching tube, wherein the electrolytic capacitor has an anode connected to the output terminal of the input and rectifying unit and a cathode connected to the drain of the second switching tube, and the source of the second switching tube is earthed, wherein
when the mains voltage connected to the input and rectifying unit is higher than or equal to a preset value, the voltage of the grid of the second switching tube is lowered to off-switch the second switching tube;
when the mains voltage connected to the input and rectifying unit lower than the preset value, a driving voltage is loaded on the grid of the second switching tube to on-switch the second switching tube, and the voltage output from the input and rectifying unit is filtered by the electrolytic capacitor.

2. The smart sine wave step-up converter according to claim 1, **characterized in that**, the first switching tube, and the second switching tube are N-channel MOS tubes.

3. The smart sine wave step-up converter according to claim 1, **characterized in that**, the smart sine wave step-up converter further comprises an MCU controlling unit, wherein the grid of the first switching tube, the grid of the second switching tube and the control terminal of the inverting paraphase unit are connected to the MCU controlling unit respectively, and the MCU controlling unit outputs the PWM pulse signals to the first switching tube, controls the on/off state of the second switching tube and controls the inverting paraphase unit to execute conversion.

4. The smart sine wave step-up converter according to claim 3, **characterized in that**, the smart sine wave step-up converter further comprises an AC sampling unit that comprises an input terminal of the AC sampling unit connected to the input and rectifying unit and an output terminal is connected to the MCU controlling unit, wherein the AC sampling unit is configured to collect a voltage value and a phase of the mains voltage and then transmit them to the MCU controlling unit, the MCU controlling unit is configured to control the inverting paraphase unit to execute inversion according to the phase of the mains voltage collected by the AC sampling unit so that the inverting paraphrase unit outputs the sine AC voltage having the same phase as the mains voltage, and is configured to determine whether the mains voltage is lower than the preset value according to the voltage value collected by the AC sampling unit:
if it is lower than the preset value, the MCU controlling unit transmits the PWM pulse signals to the grid of the first switching tube, and loads the driving voltage to the grid of the second switching tube;
if it is higher than or equal to the preset value, the MCU controlling unit controls the first switching tube to maintain off-switched, and lowers the voltage of the grid of the second switching tube.

5. The smart sine wave step-up converter according to claim 4, **characterized in that**, when determining that the mains voltage is lower than the present value, the MCU controlling unit controls the second switching tube to be on-switched at the zero-crossing point of the mains voltage according to the phase of the mains voltage collected by the AC sampling unit.

6. The smart sine wave step-up converter according to claim 5, **characterized in that**, the AC sampling unit comprises an operational amplifier and a comparator, two input terminals of the operational amplifier are respectively connected to the live and zero lines of the input and rectifying unit via their corresponding current-limiting sampling resistors, and the output terminal of the operational amplifier is connected to the MCU controlling unit so that the voltage value of the mains voltage is obtained after the MCU controlling unit calculating the voltage signal output from the operational amplifier.

7. The smart sine wave step-up converter according to claim 6, **characterized in that**, the output terminal of the operational amplifier is further connected to the anti-phased terminal of the comparator, the in-phased terminal of the comparator is connected to a reference voltage, and the output terminal of the comparator is connected to the MCU controlling unit, and the MCU controlling unit is configured to obtain the phase of the mains voltage according to the voltage signal output from the comparator.

8. The smart sine wave step-up converter according to claim 4, **characterized in that**, the smart sine wave step-up converter further comprises a current sampling unit that comprises a sampling resistor, wherein the sampling resistor is connected between the source of the first switching tube and the earth in series, and the current flows from the source of the first switching tube to the MCU controlling unit.

9. The smart sine wave step-up converter according to claim 5, **characterized in that**, the inverting paraphase unit includes an inverter bridge comprising a third switching tube, a fourth switching tube, a fifth switching tube and a sixth switching tube, and wherein the grid of the third switching tube, the grid of the fourth switching tube, the grid of the fifth switching tube, and the grid of the sixth switching tube are respectively connected to the MCU controlling unit that is configured to control the third switching tube, the fourth switching tube, the fifth switching tube and the sixth switching tube to be on-switched or off-switched in order to the inverting paraphrase unit output the sine AC voltage.
